(19) **Europäisches Patentamt**

**European Patent Office**

**Office européen des brevets**

(11) **EP 1 583 634 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(21) Anmeldenummer: **03813115.7**

(22) Anmeldetag: **11.12.2003**

(51) Int Cl.:
*B23K 31/12* (2006.01)      *B23K 11/25* (2006.01)
*B23K 9/095* (2006.01)      *B23K 26/03* (2006.01)
*G01N 29/04* (2006.01)      *G01N 29/07* (2006.01)
*B23K 15/02* (2006.01)

(86) Internationale Anmeldenummer:
**PCT/EP2003/014094**

(87) Internationale Veröffentlichungsnummer:
**WO 2004/054749 (01.07.2004 Gazette 2004/27)**

(54) **VERFAHREN ZUR BEWERTUNG EINER SICH WÄHREND EINES SCHWEISSVORGANGES AUSBILDENDEN SCHWEISSVERBINDUNG MIT LONGITUDINALEN UND TRANSVERSALEN ULTRASCHALLWELLEN**

METHOD OF EVALUATING A WELD JOINT FORMED DURING A WELDING PROCESS USING LONGITUDINAL AND TRANSVERSAL ULTRASONIC WAVES

PROCEDE D'EVALUATION D'UN ASSEMBLAGE SOUDE AU COURS D'UN PROCESSUS DE SOUDAGE UTILISANT LES ONDES ULTRASONORES LONGITUDINALES ET TRANSVERSALES

(84) Benannte Vertragsstaaten:
**AT BE BG CH CY CZ DE DK EE ES FI FR GB GR HU IE IT LI LU MC NL PT RO SE SI SK TR**

(30) Priorität: **18.12.2002   DE 10259181**
**20.03.2003   DE 10312459**

(43) Veröffentlichungstag der Anmeldung:
**12.10.2005   Patentblatt 2005/41**

(73) Patentinhaber:
• **Fraunhofer-Gesellschaft zur Förderung der angewandten Forschung e.V.**
**80686 München (DE)**
• **Bosch Rexroth AG**
**80331 Stuttgart (DE)**

(72) Erfinder: **WASCHKIES, Eckhard**
**66440 Blieskastel (DE)**

(74) Vertreter: **Thürer, Andreas**
**Bosch Rexroth AG**
**Intellectual Property**
**Zum Eisengiesser 1**
**97816 Lohr am Main (DE)**

(56) Entgegenhaltungen:
EP-A- 0 132 187              DE-A- 4 325 878
DE-A- 10 110 045            US-A- 5 920 014

## Beschreibung

Die Erfindung bezieht sich auf ein Verfahren zur Bewertung einer sich während eines Schweissvorganges ausbildenden Schweissverbindung zwischen wenigstens zwei Fügepartern gemäß dem Oberbegriff des Anspruchs 1 (siehe, zum Beispiel, DE-A-101 10 045).

## Stand der Technik

Gattungsgemäße Verfahren zur Bewertung von Schweissverbindungen unter Verwendung an sich bekannter Ultraschallverfahren sind seit langer Zeit bekannt und dienen der Qualitätsüberprüfung derartiger, meist zwischen zwei metallischen Fügepartnern erzeugten Schweissverbindungen. Neben der an sich bekannten nachträglichen Durchschallung von bereits fertig gestellten Schweissverbindungen wird beispielsweise in der DE 43 25 878 C2 ein On-line-Bewertungsverfahren beschrieben, mit dem es möglich ist, Schweissvorgänge, insbesondere im Rahmen eines Widerstands-Schweissprozesses, während des Schweissprozesses selbst, zu vermessen und entsprechend zu bewerten. Hierbei wird auf der Grundlage der Durchschallung und Auswertung von transversalen Ultraschallwellen durch den Bereich der Schweissverbindung der Zeitpunkt ermittelt, an dem die Schmelztemperatur des Schweissgutes erreicht wird und sich eine Schweisslinse zwischen beiden Fügepartner auszubilden beginnt, deren Schweisslinsenvolumen nach Erreichen der Aufschmelztemperatur während des weiteren Schweissvorganges aus der Schwächung der Scher- bzw. Transversalwellen berechnet wird. Im übrigen wird auch auf die vorstehende Druckschrift aus Gründen einer weitgehend vollumfänglichen Diskussion des übrigen, gattungsgemäßen Standes der Technik in Bezug auf Bewertungsverfahren zur Beurteilung von Schweissverbindungen verwiesen.

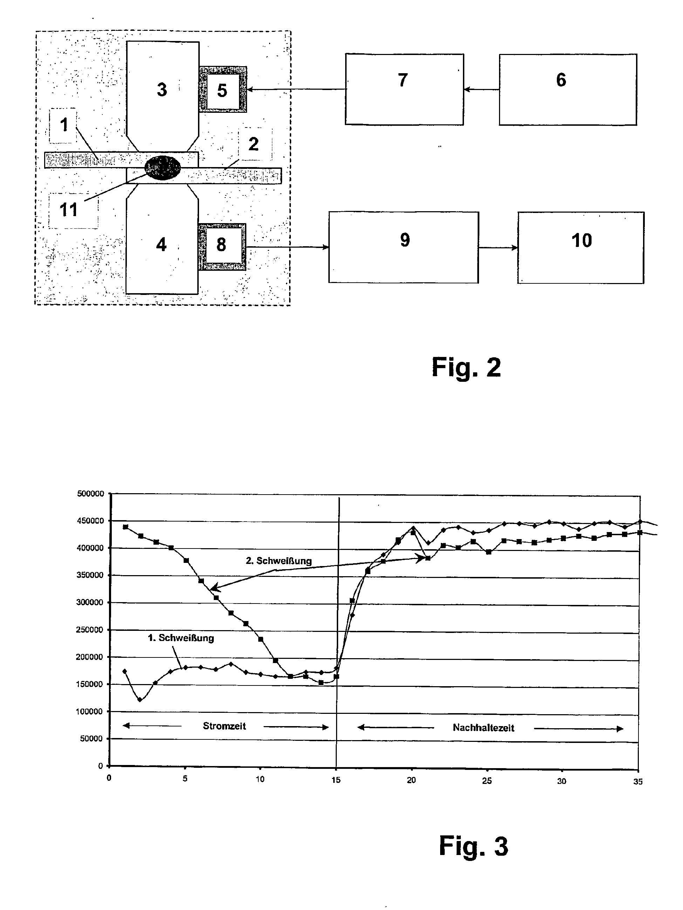

Zur Erläuterung der den bekannten Bewertungsverfahren bestehende Problematik wird im weiteren auf Fig. 2 kurz Bezug genommen, die schematisiert eine Standardmessanordnung zur Durchführung eines Schweissvorganges zum Verbinden zweier Blechbauteile im Wege des Widerstand-Schweissens zeigt. Hierbei werden zwei als Flachbleche ausgebildete Fügepartner 1 und 2 zumindest teilweise in Deckung gebracht, so dass sie im Überdeckungsbereich einen zweilagigen Blechschichtaufbau bilden. An den sich gegenüberliegenden Seiten des Blechschichtaufbaus sind jeweils eine Schweisselektrode 3, 4 angebracht, die jeweils über eine vorzugsweise ebene oder ballige Kontaktfläche mit den entsprechenden Fügepartner 1, 2 in Berührung stehen. Ferner ist die in der Bilddarstellung gemäß Fig. 2 obere Schweisselektrode 3 mit einem Ultraschallsender 5 gekoppelt, der über einen mit einer Schweissstromsteuerung 6 verbundenen Ultraschallpulsgenerator 7 angesteuert wird. In ähnlicher Weise ist die untere Schweisselektrode 4 mit einem Ultraschallempfänger 8 gekoppelt, dessen Empfangssignale über eine Auswerteeinheit 9 zur Schweisspunktbewertung 10 zugrunde gelegt werden.

Der Widerstand-Schweissprozess besteht im allgemeinen aus drei Phasen. Die erste Phase entspricht der sogenannten Vorhaltezeit, während der kein Strom fließt, die Schweisselektroden 3, 4 üblicherweise jedoch mit einer Elektrodenkraft von 1 bis 4 kN über die Kontaktflächen gegen die Fügepartner 1, 2 drücken. An die Vorhaltezeit schließt sich die Stromflussphase oder Stromzeit an, in der die Fügepartner aufgeheizt werden, bis sich zumindest im Kontaktbereich zwischen den beiden Fügepartnern 1 und 2 eine Schmelze in Form einer Schweisslinse 11 ausbildet. Die Größe des sich dabei ausbildenden Schweisslinsenvolumens ist durch die Stromstärke und die Dauer der Stromflussphase einstellbar. An die Stromflussphase schließt sich letztlich die Nachhaltezeit bzw. Abkühlphase an, in der sich die Schweisslinse abkühlt bis sie erstarrt, erst danach öffnen sich die Schweisselektroden und geben den Bereich der Schweissverbindung frei. Im Regelfall sind die vorstehenden drei Phasen in etwa zeitlich gleich lang gewählt.

Mit Hilfe der in Fig. 2 dargestellten Messanordnung wird der Bereich der sich ausbildenden Schweissverbindung während des Schweissvorganges selbst über die Schweisselektroden 3, 4 durchschallt. Hierzu werden in die Schweisselektrode 4 gemäß Fig. 2 transversale Ultraschallimpulse eingeschallt, die zunächst die Schweisselektrode 3 und anschließend den Bereich der sich ausbildenden Schweissverbindung durchlaufen, bis sie letztlich über die Gegenelektrode 4 vom Ultraschallempfänger 8 empfangen werden.

Zur Ermittlung der Größe der sich zwischen den Fügepartnern 1 und 2 ausbildenden Schweisslinse während der Stromflussphase wird der zeitliche Verlauf der transversalen Ultraschalldurchlässigkeit durch den Bereich der sich ausbildenden Schweissverbindung herangezogen. Bei der Auswertung geht man in an sich bekannter Weise davon aus, dass das Ultraschalldurchlässigkeitsverhalten durch den sich ausbildenden Schweissverbindungsbereich für transversale Ultraschallwellen im wesentlichen ausschließlich durch die Schweisslinsenbildung beeinflusst wird.

Genauere Untersuchungen durch die Anmelderin selbst zeigen jedoch, dass die vorstehenden, nach dem Stand der Technik angestellten Annahmen die Realität über das tatsächliche Ausbreitungsverhalten von Ultraschallwellen insbesondere von Transversalwellen nur unzureichend beschreiben, wodurch die bisherigen Aussagen die räumliche Ausbildung einer die Festigkeit einer Schweissverbindung bestimmenden Schweisslinse nur unbefriedigend genau sind. So ergaben detailliertere Analysen zur Schallausbreitung, dass die Ultraschalldurchlässigkeit der miteinander zu verschweissenden Fügeteile nicht nur durch die Bildung der Schweisslinse selbst beeinflusst wird, sondern auch durch die Erwärmung und Vergrößerung der Kontaktzonen zwischen den jeweiligen Schweisselektroden und den Fügepartneroberflächen sowie der Kontaktzone zwischen den jeweiligen Fügepartnern. Es hat sich gezeigt, dass die Ultraschallübertragung an den Kontaktzonen stark von der Temperatur, dem Druck, der Frequenz sowie der realen Kontaktflächengröße abhängig ist. Vorstehende Parameter verändern sich während des Schweissvorganges und üben einen nicht zu vernachlässigenden Einfluss auf die zu bestimmende Ultraschalldurchlässigkeit aus.

Zur Veranschaulichung dieser nach dem Stand der Technik bisher unberücksichtigt gebliebenen Effekte bezüglich des Temperatureinflusses sowie des Einflusses der Kontaktflächenvergrößerung auf die Ultraschalldurchlässigkeit durch eine sich ausbildende Schweissverbindung wird auf Fig. 3 verwiesen.

Fig. 3 zeigt in Diagrammdarstellung den Verlauf der Ultraschalldurchlässigkeit durch ein 1 mm dickes Einzelblech, das zweimalig nacheinander an ein und der gleichen Stelle im Wege des Widerstand-Schweissens behandelt worden ist. Das Diagramm weist eine Abszisse auf, längs der die Schweissdauer in Millisekunden x 10 aufgetragen ist. Hierbei ist lediglich die Stromflussphase bzw. Stromzeit von 0 bis 150 ms sowie die Abkühlphase zwischen 150 ms und 350 ms dargestellt. Längs der Ordinate des in Fig. 3 dargestellten Diagrammes sind Ultraschallamplituden aufgetragen, die der Schalldurchlässigkeit durch den Bereich der sich ausbildenden Schweissverbindung für die Ultraschallwellen entsprechen.

Die in Fig. 3 dargestellten Messwerte entsprechen Schweissungen, die mit einem Strom von 5 kA und einem jeweiligen Elektrodendruck von 2 kN durchgeführt worden sind. Der Durchmesser der Kontaktflächen zwischen der Blechoberfläche und den Schweisselektroden beträgt etwa 4 bis 5 mm. Nachträglich durchgeführte Schliffe an der erkalteten Schweissstelle belegen, dass sich innerhalb des Bleches keine Schmelzlinse ausgebildet hat.

Nun zeigt sich, dass sich während der ersten Schweissung (unterer Funktionsverlauf innerhalb der Stromzeit sowie oberer Funktionsverlauf innerhalb der Nachhaltezeit/Abkühlphase) der Durchlässigkeitsverlauf während der Stromzeit nicht sehr ändert. Die Schallschwächung durch die Temperaturerhöhung der Elektroden-Blechkontakte sowie die Durchlässigkeitsverbesserung durch die Kontaktflächenvergrößerung heben sich in etwa auf. Erst nach Ende der Stromzeit macht sich die Kontaktflächenvergrößerung bemerkbar, wodurch die Vergrößerung des Elektroden-Blechkontaktes zu einem merklichen Durchlässigkeitsanstieg in der Abkühlphase führt.

Bei der Wiederholschweissung auf denselben Punkt (stark abfallender Funktionsverlauf innerhalb der Stromzeit sowie unterer Funktionsverlauf innerhalb der Nachhaltezeit) ändert sich die Größe der Elektroden-Blechkontaktflächen nicht wesentlich, was daran zu erkennen ist, dass die Ultraschalldurchlässigkeit zu Beginn der Stromzeit und am Ende der Nachhaltezeit praktisch gleich groß ist. Die Schwächung der Durchlässigkeit während der Stromzeit innerhalb der zweiten Schweissung wird allein durch die Temperaturerhöhung des Elektroden-Blechkontaktes verursacht. Somit zeigt sich, dass es anhand des Schalldurchlässigkeitsverlaufes, insbesondere bei der Wiederholschweissung, nicht möglich ist, zu erkennen, ob die Schallschwächung durch eine sich ausbildende Flüssigphase bzw. Schmelzung im Blechinneren verursacht wird, oder lediglich durch den Temperaturanstieg an den Elektroden-Blechkontakten. Erst, wie eingangs erwähnt, mit Hilfe eines nachträglichen Anschliffes im Bereich der Schweissstelle ist es möglich festzustellen, ob im Blechinneren eine Aufschmelzung stattgefunden hat oder nicht.

Das vorstehende Beispiel zeigt deutlich, dass durch ausschließliche Untersuchung des Schalldurchlässigkeitsverhaltens von Scherwellen bzw. Transversalwellen durch die Schweissstelle eine nur unzureichende Aussage über eine sich ausbildende Schweisslinse angestellt werden kann.

## Darstellung der Erfindung

Die vorstehenden Ausführungen machen deutlich, dass eine Bewertung einer sich während eines Schweissvorganges ausbildenden Schweissverbindung zwischen wenigstens zwei Fügepartnern unter Einsatz wenigstens eines den Bereich der sich ausbildenden Schweissverbindung mit Ultraschallwellen durchschallenden Ultraschallsenders sowie wenigstens eines Ultraschallempfängers, der Schalldurchlässigkeitsänderungen der den Bereich der sich ausbildenden Schweissverbindung durchdringenden Ultraschallwellen zur Beurteilung der Schweissverbindung registriert, auf der Grundlage der ausschließlichen Detektion und Auswertung von an sich bekannten, den Bereich der sich ausbildenden Schweissverbindung durchschallenden transversalen Ultraschallwellen nur sehr unzureichend bzw. gar unmöglich ist. So gilt es, ein Bewertungsverfahren anzugeben, das mit hoher Exaktheit und Zuverlässigkeit eine aussagekräftige Bewertung einer Schweissverbindung ermöglicht unter Vermeidung aller bei den bekannten Verfahren innewohnenden Unzulänglichkeiten bzw. Unsicherheiten.

Die Lösung der der Erfindung zugrunde liegenden Aufgabe ist im Anspruch 1 angegeben. Gegenstand der Unteransprüche enthalten den Erfindungsgedanken vorteilhaft weiterbildende Merkmale, die überdies auch der weiteren Beschreibung unter Bezugnahme auf die Ausführungsbeispiele entnommen werden können.

Das erfindungsgemäße Verfahren geht von der Erkenntnis aus, die Einflüsse der Kontakte zwischen den Koppelflächen zur Schallein- bzw. -auskopplung an den Oberflächen der Fügepartner sowie zwischen den Fügepartnern (bis auf die Schmelzenbildung) auf das Schalldurchlässigkeitsverhalten weitgehend zu eliminieren. Wie im weiteren detailliert ausgeführt wird, erlaubt das erfindungsgemäße Verfahren eine nahezu ausschließliche Ermittlung der Schmelzvorgänge im Bereich der Fügepartner. Aus thermodynamischen Gründen findet der Schmelzvorgang in der Regel an der Kontaktzone der sich berührenden Fügepartner statt.

Der Fall, dass sich an anderer Stelle z.B. den Schallein- und Auskoppelstellen Schmelzphasen bilden wird ebenfalls registriert, er stellt eine Störung im Schweißprozess dar (z.B. Ausfall der Elektrodenkühlung). Er wird dadurch erkannt dass der Schmelzprozess zu einem ungewöhnlichen Zeitpunkt auftritt.

Dem erfindungsgemäßen Verfahren liegen folgende Erkenntnisse zugrunde: Kontakte zwischen Festkörpern, wie sie beispielsweise zwischen den Schweisselektroden und der Oberfläche eines Fügepartners sowie auch zwischen zwei unmittelbar aneinander liegenden Fügepartnern gebildet werden, stellen keineswegs ideale vollständige Kontaktflächen mit einer nur geringen Temperaturabhängigkeit in Bezug auf die Ultraschalldurchlässigkeit dar. Derartige Ultraschallkontakte stellen vielmehr reale, unvollständige Kontakte dar, die sehr wohl eine von der Kontaktqualität abhängige Temperaturabhängigkeit der Ultraschalldurchlässigkeit aufweisen. Im Unterschied zu idealen Festkörperkontakten, bei denen die gesamte Fläche kontaktiert ist, bestehen reale Kontakte infolge der Rauigkeit aller realen Oberflächen lediglich aus einer Summe von Einzelkontakten. Je schlechter der Gesamtkontakt, desto stärker ist die Temperaturabhängigkeit der Ultraschalldurchlässigkeit. Zur Beschreibung des Schalldurchgangs realer Grenzflächen hat sich das so genannte Kontaktsteifigkeitsmodell etabliert (siehe hierzu J.-M. Baik, R.B. Thompson, Ultrasonic scattering from imperfect interfaces: A Quasi Static Model; J. Nondestr. Eval. 4 (1984), 177ff; Kendall, K.; Tabor, D.: Proc.Roy Soc. Lond. A 323, 321 (1971); Peter B. Nagy "Ultrasonic Classification of Imperfect Interfaces" J. NDE, S. 127, Vol. 11, 1992), gemäß dem die Ultraschallübertragung an Festkörperkontakten nur wenig von der Wellenart abhängig ist, d.h. die Schallübertragung von longitudinalen und transversalen Ultraschallwellen durch reale unvollständige Kontaktflächen ist in etwa gleich ausgebildet.

Zur Ermittlung des Schalldurchlässigkeitsverhaltens, beispielsweise durch einen zweischichtigen Aufbau, bestehend beispielsweise aus zwei aneinander gefügten Blechlagen, zeigt sich, dass sich die Gesamtschalldurchlässigkeit durch die Blechlagen als Produkt der Schalldurchlässigkeiten durch die einzelnen durchschallten Zonen beschreibbar ist, d.h. im Falle des vorstehenden Zweischichtaufbaus setzt sich das Produkt aus vier Einzeltermen zusammen, nämlich die Durchlässigkeiten der Elektroden-Blechkontakte (für die Schallein- und auskopplung), die Durchlässigkeit des Blech-Blechkontaktes sowie die Durchlässigkeit durch das Blechinnere.

Schließlich kann davon ausgegangen werden, dass Flüssigkeiten, d.h. sich ausbildende flüssige Schweisslinsen, keine Transversalwellen zu übertragen vermögen, gleichwohl longitudinale Schallwellen nur unwesentlich durch die Flüssigphase in ihrem Ausbreitungsverhalten beeinflusst werden.

Auf der Basis der vorstehenden Erkenntnisse zeichnet sich das erfindungsgemäße Verfahren dadurch aus, dass der Bereich der Schweissverbindung sowohl mit longitudinalen als auch mit transversalen Ultraschallwellen durchschallt wird. Zur Registrierung der beiden unterschiedlichen Ultraschallwellenarten werden mit Hilfe des Ultraschallempfängers die zeitabhängigen Schalldurchlässigkeitsänderungen sowohl für die longitudinalen als auch für die transversalen Ultraschallwellen jeweils getrennt voneinander registriert. Zur gezielten Beseitigung der Kontakteinflüsse zwischen den Schallein- bzw. Schallauskoppelflächen und den jeweiligen Fügepartnern werden die zeitabhängigen Schalldurchlässigkeitsänderungen bezüglich der longitudinalen und transversalen Ultraschallwellen ins Verhältnis gesetzt und anhand der damit gewonnenen Verhältnisfunktion der Zeitpunkt $t_s$ ermittelt, an dem sich im Bereich der Schweissverbindung eine Schmelze ausbildet. Sowohl der Zeitpunkt $t_S$ als auch der weitere Verlauf der Verhältnisfunktion dienen als Grundlage für die Bewertung der Schweissverbindung.

Das erfindungsgemäße Verfahren eignet sich nicht nur zur Untersuchung von Schweissverbindungen, die im Wege eines Erstschweißung zwischen zwei Fügepartner herstellbar sind, das erfindungsgemäße Verfahren kann auch bei wiederholtem Energieeintrag zwischen zwei oder mehreren bereits in Verbindung stehenden Fügepartnern, bspw. im Wege eines Mehrimpulsschweissens erfolgreich eingesetzt werden. Hierbei befinden sich die Fügepartner bereits durch Vor- oder Erstschweissungen in einem ersten stofflichen Kontakt, der jedoch in einem weiteren nachträglichen Schweissverfahren in überwachter Weise verstärkt bzw. verfestigt werden soll. Durch die unmittelbare Überwachung der sich ausbildenden Schweisslinse lässt sich ihr Auftreten sowie ihre Größe und damit die Güte der sich ausbildenden Schweissverbindung exakt angeben.

Das erfindungsgemäße Verfahren lässt sich unabhängig von der Art des Schweissverfahrens einsetzen. Sollte es neben dem technischen Anwendungsgebiet des Fügeschweissens, sei es das Kontaktschweissen, wie bspw. das Widerstandsschweissen, oder das Kontaktfreie Schweissen, wie bspw. das Strahlschweissen, weitere Einsatzgebiete geben, in denen die Überwachung der Ausbildung einer Flüssigphase innerhalb eines festen Mediums vermittels eines geeigneten Energieeintrags von Bedeutung ist, z.B. die Bewertung von schmelzenden Beschichtungen, so ist die technische Lehre des erfindungsgemäßen Verfahrens auch auf jene Anwendungsfälle übertragbar, d.h. der dem Anspruch 1 zugrundeliegende Gedanke soll nicht ausschließlich auf das Schweissverfahren per se beschränkt sein, sondern all jene technischen Applikationen mitumfassen, bei denen sich durch lokale thermische Erhitzung innerhalb eines Festkörpers räumlich begrenzte Schmelzen ausbilden, so bspw. zur lokalen Materialstrukturumwandlung bzw. -änderung. Derartige Umwandlungen können bspw. zur lokalen Materialhärtung nutzbar gemacht werden.

Das erfindungsgemäße Verfahren soll detailliert im weiteren unter Bezugnahme auf die Figuren beschrieben werden.

**Kurze Beschreibung der Erfindung**

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:

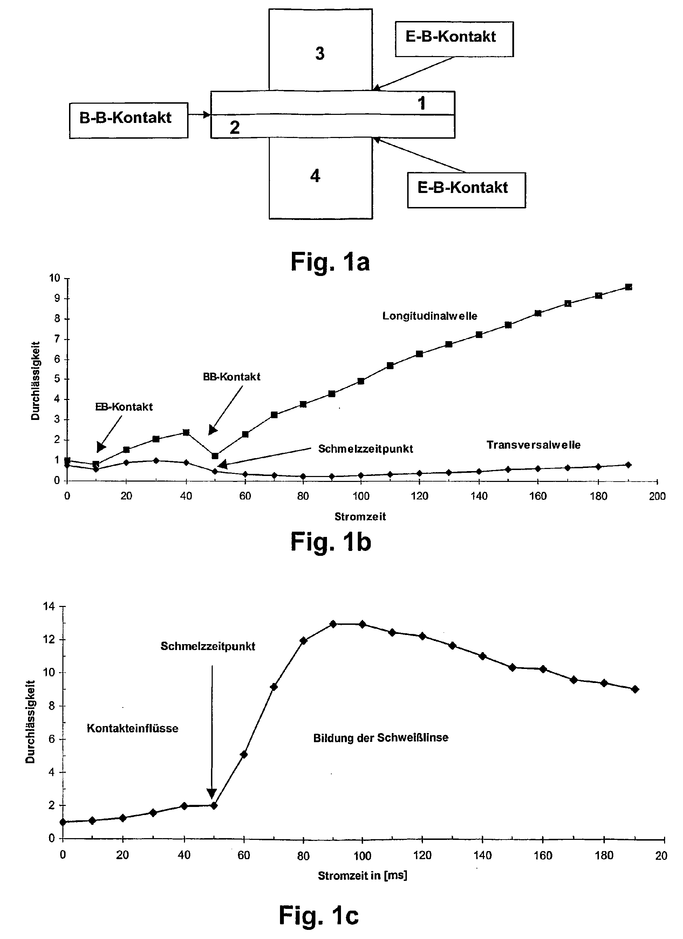

Fig. 1 a    schematisierte Anordnung zum Durchführen eines Schweissprozesses unter Verwendung des Widerstand-Schweissens,

Fig. 1 b    Diagrammdarstellung zur Veranschaulichung des Durchlässigkeitsverlaufes von Transversal- und Longitudinalwellen sowie

Fig. 1c     Diagrammdarstellung zur Veranschaulichung des Durchlässigkeitsverlaufes aus dem Verhältnis der Schalldurchlässigkeiten von Longitudinal- zu Transversalwelle,

Fig. 2      Standardmessanordnung,

Fig. 3      Diagrammdarstellung zur Veranschaulichung des Schalldurchlässigkeitsverlaufes zweier nacheinander an einem 1 mm dicken Blech durchgeführten Kontaktschweissungen, sowie

Fig. 4      modifizierte Messanordnung zur getrennten Schalldurchlässigkeitsmessung von Longitudinal- und Transversalwellen.

**Wege zur Ausführung der Erfindung, gewerbliche Verwendbarkeit**

Zur weiteren Beschreibung des Schalldurchlässigkeitsverhaltens von Longitudinal- und Transversalwellen, die eine sich ausbildende Schweissverbindung während ihrer Entstehung, also während des Schweissprozesses, durchdringen bzw. mit der Schweissverbindung in Wirkverbindung treten, sei auf die in Fig. 1a stark schematisierte Darstellung verwiesen, die die wichtigsten, den Schallweg von Ultraschallwellen beeinflussende Komponenten zeigt. So sei angenommen, dass als Fügepartner 1, 2 zwei Flachbleche miteinander über einen flächenhaften Presskontakt in Berührung stehen und einen Blech-Blech-Kontakt, B-B-Kontakt, ausbilden. Für den Energieeintrag zur Ausbildung einer thermisch bedingten Schweisslinse zwischen den beiden Fügepartner 1, 2 sind jeweils eine Schweisselektrode 3, 4 an den entsprechenden Oberseiten der Bleche angebracht, die jeweils mit den Fügepartner 1, 2 einen Elektroden-Blech-Kontakt, E-B-Kontakt, bilden. Wie bereits unter Bezugnahme auf Fig. 2 dargestellt, die eine Standardmessanordnung zur Beurteilung einer Schweissverbindung zeigt, werden über die Schweisselektroden 3, 4 Ultraschallwellen in die Fügepartner 1, 2 eingeschallt bzw. entsprechend registriert. Typischerweise ist ein Ultraschallsender mit der Schweisselektrode 3, entsprechend ein Ultraschallempfänger akustisch mit der Schweisselektrode 4 gekoppelt.

Ausgehend von der in Fig. 1 a dargestellten schematisierten Messanordnung lässt sich die Schalldurchlässigkeit für die Longitudinal- sowie Transversalwellen durch folgende mathematische Zusammenhänge beschreiben:

$$D_l(t) = (EB)_l(t) \cdot (BB)_l(t) \cdot (BI)_l(t) \cdot (BE)_l(t) \qquad (1)$$

$$D_t(t) = (EB)_t(t) \cdot (BB)_t(t) \cdot (BI)_t(t) \cdot (BE)_t(t) \qquad (2)$$

Wie bereits vorstehend erwähnt, verhält sich die Ultraschallübertragung an Festkörperkontakten, d.h. realen Kontakten, nach dem sogenannten Kontaktsteifigkeitsmodell, wonach sich die Ultraschallübertragung nur wenig von der Wellenart, d.h. ob longitudinale oder transversale Welle, abhängig ist. Zur mathematischen, vorstehenden Beschreibung des Durchlässigkeitsverlaufes ergibt sich die Durchschallung der in Fig. 1 a dargestellten Messanordnung als Produkte der Durchlässigkeiten an den einzelnen durchschallten Zonen. Hierbei entsprechen die Terme EB(t) bzw. BE(t) jeweils der Schalldurchlässigkeit zwischen dem Elektroden-Blech-Kontakt, der an der Grenzfläche zwischen der Schweisselektrode 3 und dem Fügepartner 1 bzw. zwischen dem Fügepartner 2 und der Schweisselektrode 4 auftritt. Es kann im weiteren davon ausgegangen werden, dass EB(t) und BE(t) in etwa gleich sind. Die in den mathematischen Formelausdrücken 1 und 2 verwendeten tiefgestellten Indizes I und t geben jeweils die Schalldurchlässigkeit durch die einzelnen Kontakte für Longitudinalwellen (I) bzw. Transversalwellen (t) an. Der Term BB(t) entspricht der Schalldurchlässigkeit zwischen dem Blech-Blechkontakt zwischen den beiden Fügepartnern 1 und 2 und letztlich der Term BI(t) entspricht der Schalldurchlässigkeit jeweils innerhalb der Fügepartner 1 bzw. 2.

Stellt man dem vorstehend durch die Gleichungen 1 und 2 vorgegebenen mathematischen Modell für die Schalldurchlässigkeit bezüglich der Longitudinalwellen und Transversalwellen den tatsächlich gemessenen Schalldurchlässigkeitsverlauf für Longitudinal- und Transversalwellen gegenüber, die in der Diagrammdarstellung gemäß Fig. 1 b aufgetragen sind, so können folgende Feststellungen getroffen werden.

Fig. 1 b zeigt ein Diagramm, längs dessen Abszisse die Stromzeit während des Schweissvorganges angetragen ist. Längs der Ordinate sind die gemessenen Durchlässigkeitswerte zu entnehmen. Bezüglich der beiden im Diagramm eingetragenen Funktionsverläufe, entspricht der untere Funktionsverlauf dem Durchlässigkeitsverhalten der Transversalwellen. Der obere Funktionsverlauf stellt das Schalldurchlässigkeitsverhalten der Longitudinalwellen dar. Die in Fig. 1 b dargestellten Messwerte sind während eines Widerstand-Schweissprozesses an zwei jeweils 1 mm dicken unbeschichteten Blechen gewonnen worden.

Zu Beginn der Schweissung ist für beide Wellenarten ein leichter Rückgang der Schalldurchlässigkeit zu beobachten, der durch eine temperaturbedingte Schallschwächung am Elektroden-Blech-Kontakt erklärbar ist. Infolge einer unmittelbar darauffolgenden wirksam werdenden Vergrößerung des Elektroden-Blech-Kontaktflächenbereiches steigt die Durchlässigkeit für beide Wellenarten dennoch an. Erst nach etwa 30 bis 40 ms setzt eine deutlich erkennbare Schallschwächung für beide Wellenarten ein, die durch die Temperaturerhöhung an dem innen liegenden Blech-Blechkontakt hervorgerufen wird. Da die Blech-Blech-Kontaktfläche weitaus größer ausgebildet ist als die Elektroden-Blech-Kontaktflächen ist der temperaturerhöhende Effekt zwischen der Blech-Blech-Kontaktfläche stärker ausgebildet als jener vorstehend beschriebene Temperatureffekt an den Elektroden-Blech-Kontaktflächen. Bis zum Zeitpunkt des Erreichens der Schmelztemperatur $t_s$, die den Schmelzzeitpunkt definiert, ab dem sich zwischen den Fügepartnern 1 und 2 eine Schmelzlinse beginnt auszubilden, ist festzustellen, dass das Schalldurchlässigkeitsverhalten sowohl für die Transversalwelle als auch für die Longitudinalwelle in gleicher Weise beschreibbar ist. Mit Erreichen der Schmelztemperatur $t_s$ am Blech-Blech-Kontakt zeigen die Durchlässigkeitsverläufe der Longitudinal- und Transversalwellen jedoch einen deutlichen unterschiedlichen weiteren Verlauf. Die Schalldurchlässigkeit der Longitudinalwelle steigt trotz weiterer Ausbildung einer Schmelzlinse zwischen beiden Fügepartnern nahezu kontinuierlich an, die letztendlich bedingt ist durch die Vergrößerung der Elektroden-Blech-Kontaktflächen. Hingegen zeigt das Schalldurchlässigkeitsverhalten der Transversalwelle einen bleibenden tiefergehenden Einbruch, der letztlich durch die sich ausbildende Schweisslinse am Blech-Blech-Kontakt verursacht ist, weil Transversalwellen viskose oder gar flüssige Phasen nicht zu durchdringen vermögen. Vielmehr wird die Transversalwelle an der sich ausbildenden Schmelzlinse regelrecht reflektiert.

Demgegenüber wird für die Longitudinalwelle die kontaktbedingte Schwächung, die vor Erreichen des Schmelzzeitpunktes am Blech-Blech-Kontakt vorliegt, durch die sich ausbildende Schmelzlinse aufgrund eines sich einstellenden idealen Flächenkontaktes regelrecht aufgehoben, weshalb die longitudinale Schallwellendurchlässigkeit, bedingt durch die Verbreiterung der Schweißlinse, auch nach Erreichen des Schmelzzeitpunktes kontinuierlich ansteigt.

Setzt man nun die in den Gleichungen 1 und 2 bezeichneten Schalldurchlässigkeiten für Longitudinal- und Transversalwellen ins Verhältnis zueinander, so heben sich all jene Einflüsse auf, die auf beide Wellenarten gleich einwirken. Dies betrifft insbesondere Einflüsse, die durch die Kontaktflächenvergrößerung sowie durch den Temperaturanstieg in den Kontaktzonen hervorgerufen werden. Auch kürzen sich die Terme $BI_l$ sowie $BI_t$ gegenseitig weg, zumal diese bei niedrigen Frequenzen und insbesondere kurzen Laufwegen durch die Fügepartner in etwas gleich groß sind und insofern keine wesentliche Rolle im Hinblick auf die Schallschwächung spielen. Es ergibt sich daher folgender weiterer Zusammenhang:

$$\frac{D_l(t)}{D_t(t)} = \frac{(EB)_l^2(t)\cdot(BB)_l(t)\cdot(BI)_l(t)}{(EB)_t^2(t)\cdot(BB)_t(t)\cdot(BI)_t(t)} \qquad (3)$$

Vorstehende Gleichung (3) lässt sich in nachstehender Weise in die in Gleichung (4) vereinfachte Form bringen, die lediglich aus zwei Termen gemäß den Gleichungen (5) und (6) besteht.

$$\frac{D_l(t)}{D_t(t)} \approx \frac{(EB)_l^2(t)\cdot(BB)_l(t)}{(EB)_t^2(t)\cdot(BB)_t(t)} = f_1^2(t)\cdot f_2(t) \qquad (4)$$

mit

$$f_1(t) = \frac{EB_1}{EB_t}(t) \qquad (5)$$

und

$$f_2(t) = \frac{BB_t}{BB_t}(t) \qquad (6)$$

Hierbei beschreibt die Gleichung (5) den Verlauf des Schalldurchlässigkeitsverhältnisses an den Elektroden-Blech-Kontakten, der sich aufgrund einer Plastifizierung am Elektroden-Blech-Kontakt zeitlich etwas ändern kann. Gleichung (6) beschreibt den Verlauf des Verhältnisses der Schalldurchlässigkeiten am Blech-Blech-Kontakt. Dieser in Gleichung (6) wiedergegebene Term zeigt im Bereich des Schmelzzeitpunktes $t_s$ eine große Änderung, der mit dem Fest-Flüssig-Übergang zusammenhängt. Somit ist das Verhältnis aus longitudinaler und transversaler Schallwellendurchlässigkeit gemäß Gleichung (4) insbesondere im Bereich des Schmelzzeitpunktes im wesentlichen durch den Term gemäß Gleichung (6) bestimmt und die Kontakteinflüsse weitgehend eliminiert. Aus Gleichung (4) kann somit der Fest-Flüssig-Übergang an einem Sprung der Steigung leicht ermittelt werden. Hierzu sei insbesondere auf Fig. 1c verwiesen, das ein Diagramm zeigt, in dem der Funktionsverlauf der Gleichung (4), sprich der Durchlässigkeitsverlauf des Verhältnisses aus Longitudinal- und Transversalwellen-Durchlässigkeit abgebildet ist. So steigt der Funktionsverlauf zwischen 0 ms und dem Schmelzzeitpunkt $t_s$, der im Fall Fig. 1 b etwa bei 50 ms liegt, kontinuierlich leicht an. Am Schmelzzeitpunkt $t_s$ erfolgt ein deutlicher Anstieg des Funktionsverlaufes, der sich in einer deutlichen sprunghaften Änderung im Steigungsverhalten der Funktion niederschlägt. So erfährt die Steigung des Funktionsverlaufes am Punkt des Schmelzzeitpunktes $t_s$ eine erhebliche positive Änderung, die sich letztlich durch das zeitliche Verhalten des Terms gemäß Gleichung (6) bestimmt.

Durch die erfindungsgemäße Division des Schalldurchlässigkeitsverhaltens bezüglich der longitudinalen und transversalen Ultraschallwellenanteilen gelingt es, die Kontakteinflüsse, die von den EB- und BB-Kontaktstellen herrühren, bei der Beurteilung des akustischen Durchschallungverhaltens der sich ausbildenden Schweissstelle nahezu vollständig zu eliminieren. So ist es in vielen Anwendungsfällen von besonderer Bedeutung für die Beurteilung einer Schweissverbindung lediglich festzustellen, ob und wann die Flüssigphase zwischen den sich berührenden Fügepartnern während des Schweissvorganges erreicht wird oder nicht. Darüber hinaus ist die Geschwindigkeit mit der die Bildung der Schmelzphase erfolgt ein Mittel die zu erwartende Schweißlinsengröße abzuschätzen. Die Geschwindigkeit des Schweißlinsenwachstums ergibt sich aus der Steigung der Verhältnisfunktion nach dem Schmelzzeitpunkt.

Insbesondere werden mit dem erfindungsgemäßen Verfahren die Einsatzmöglichkeiten des Ultraschallprüfverfahrens zur Schweisspunktbewertung entscheidend erweitert. So ist es beispielsweise möglich, bei mehr Mehrimpulsschweissungen, wie sie beispielsweise zum Stand der Technik unter Bezugnahme auf die Fig. 3 beschrieben worden ist, genaue Aussagen zu treffen, ob sich eine Schweisslinse ausgebildet hat oder nicht. Dies ist, wie einleitend ausgeführt, mit den bisherigen Ultraschallprüfverfahren nicht möglich.

Insbesondere bei Schweisskonstellationen, wie es beispielsweise beim Mikrofügen der Fall ist, in denen der Kontaktflächeneinfluss im Vergleich zum Einfluss der sich zwischen den Fügepartnern ausbildenden Flüssigphase besonders groß ist, vermag das erfindungsgemäße Bewertungsverfahren zuverlässige Aussagen über die Ausbildung von Flüssigphasen zwischen den jeweiligen Fügepartnern zu geben.

Überdies eröffnen sich mit dem erfindungsgemäßen Bewertungsverfahren für Schweissprozesse vollkommen neue Anwendungsfelder, in denen der Kontaktzoneneinfluss und die Ausbildung der Flüssigphase zeitlich nicht getrennt werden können, wie es beispielsweise bei kurzzeitigen Schweissprozessen, insbesondere beim Kondensatorentladungsschweissen der Fall ist.

Auch ermöglicht das erfindungsgemäße Verfahren eine zuverlässige Analyse und Bewertung einer sich ausbildenden Schweissverbindung, bei der der Schweissvorgang an den Kontaktflächen zwischen den Schweisselektroden und den jeweiligen Fügepartnern große Veränderungen der Kontaktflächen bewirken, wie es beispielsweise beim sogenannten Buckelschweissen der Fall ist. Insbesondere bei derartigen Schweissungen war es bisher schwierig bis unmöglich, entsprechende Bewertungen vorzunehmen.

In gleicher Weise eignet sich das Verfahren zur Beurteilung von Schweissungen von Drähten auf Blech oder Draht auf Draht. Auch in diesen Fällen verändern sich die Kontaktflächen zwischen Elektrode und Schweissteil während des Schweissens erheblich.

Das erfindungsgemäße Bewertungsverfahren lässt sich neben dem vorstehend beschriebenen Widerstand-Schweissen, bei dem die Ultraschallwellen über eine Schweisselektrode in die Fügepartner eingekoppelt und über eine entsprechend positionierte Gegenelektrode aus den Fügepartnern ausgekoppelt werden, auch bei anderen, insbesondere kontaktfreien Schweissverfahren erfolgreich anwenden. Beispielsweise ist es möglich, im Wege eines Strahlschweissverfahrens, wie beispielsweise Laser-, Elektronen- oder lonenstrahlverfahren, Ultraschallwellen in geeigneter Weise in die zu verbindenden Fügepartner ein- bzw. auszukoppeln. Hierbei ist es jedoch erforderlich, den Ultraschallsender bzw. Ultraschallempfänger direkt an eine entsprechende Oberfläche der jeweiligen Fügepartner akustisch anzukoppeln. Der Vorteil des Widerstand-Schweissverfahrens im Unterschied beispielsweise zum kontaktfreien Strahlschweissen ist darin zu sehen, dass der den Schweissprozess bewirkende Energieeintrag über die gleiche Koppelfläche in die Schweisspartner eindringt, über die auch die Ultraschallwellen zur Bewertung der Schweissverbindung ein- bzw. ausgekoppelt werden. Gleichwohl können die vorstehenden Überlegungen zum erfindungsgemäßen Verfahren auch auf andere Schweissprozesstypen erfolgreich Anwendung finden.

Das erfindungsgemäße Verfahrensprinzip beruht grundsätzlich auf der gleichzeitigen Bestimmung und Auswertung der longitudinalen und transversalen Durchlässigkeitsverläufe durch die sich ausbildende Schweissverbindung. Die Bestimmung der Schalldurchlässigkeitsverläufe für beide Wellenarten kann auf verschiedene Weise realisiert werden. Prinzipiell entstehen bei der Schallausbreitung in räumlich begrenzten Festkörpern durch die Reflexion der Schallwellen an den Begrenzungsflächen immer auch die jeweils andere Wellenart, d.h. bei der Ausbreitung einer Transversalwelle entsteht auch ein gewisser longitudinaler Anteil und umgekehrt. Diesen Anteil kann man durch den Einschallwinkel und die Form des Ausbreitungsmediums beeinflussen, insbesondere bei Anwendung des erfindungsgemäßen Verfahrens beim Widerstand-Schweissen, bei dem die Ultraschallwellen zunächst in die Schweisselektrode eingekoppelt werden.

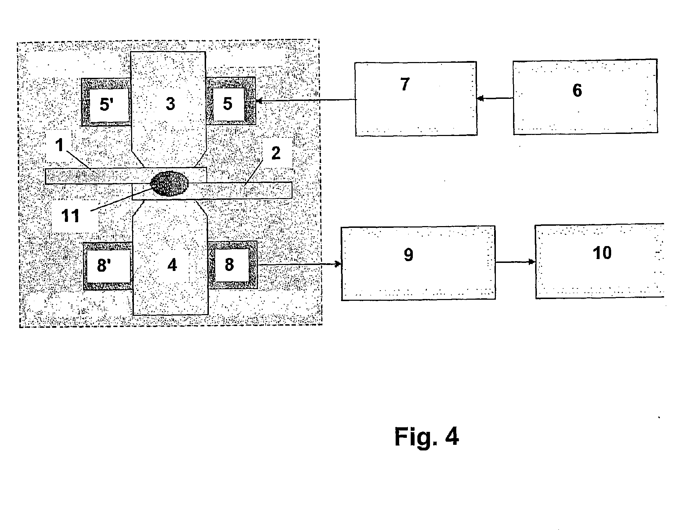

Neben der bereits bekannten Standardmessanordnung, wie sie in Fig. 2 dargestellt ist, weist eine vorteilhafte Messanordnung zwei Ultraschallsender 5, 5' gemäß Fig. 4 auf, von denen der eine Sender bevorzugt Transversalwellen 5 sowie der andere Sender 5' bevorzugt Longitudinalwellen über die Schweisselektrode 3 in die Fügeteile 1, 2 einkoppeln. Ebenfalls sieht die Gegenelektrode 4 zwei unterschiedliche Empfänger 8, 8' vor, von denen jeweils der eine Ultraschallempfänger Transversalwellen sowie der andere Ultraschallempfänger Longitudinalwellen zu detektieren vermag. Auch ist es möglich, nur mit einem einzigen Ultraschallempfänger 8 zu arbeiten, wobei das empfangene Signal in seine longitudinalen und transversalen Schwingungsanteile zerlegt werden muss. Dies kann beispielsweise dadurch geschehen, dass das Empfangssignal in zwei verschiedenen Zeitfenstern ausgewertet wird.

Die Auswertung des Empfangssignals ist auch in einem gemeinsamen Zeitfenster möglich, sofern der longitudinale und der transversale Signalanteil in unterschiedlichen Frequenzbereichen vorliegt. In einem derartigen Fall können beide Schwingungsanteile durch entsprechende Frequenzfilterung des Empfangssignals selektiv detektiert werden.

So konnten beispielsweise die in den Fig. 1a und 1b dargestellten Messwerte derart erhalten werden, wobei das Empfangssignal breitbandig empfangen und anschließend digital gefiltert wurde. Das transversale Empfangssignal ist mit einem Tiefpass mit einer oberen Grenzfrequenz von 150 kHz ausgefiltert worden, das longitudinale Empfangssignal wurde über einen Hochpass mit einer unteren Grenzfrequenz von 300 kHz ausgewertet.

**Bezugszeichenliste**

| | |
|---|---|
| 1,2 | Fügepartner |
| 3,4 | Schweisselektroden |
| 5, 5' | Ultraschallsender |
| 6 | Schweissstromsteuerung |
| 7 | Ultraschallpulsgenerator |
| 8, 8' | Ultraschallempfänger |
| 9 | Auswerteeinheit |
| 10 | Schweisspunktbewertung |

**Patentansprüche**

1. Verfahren zur Bewertung einer sich während eines Schweissvorganges ausbildenden Schweissverbindung zwischen wenigstens zwei Fügepartnern unter Einsatz wenigstens eines den Bereich der sich ausbildenden Schweissverbindung mit Ultraschallwellen durchschallenden Ultraschallsenders sowie wenigstens eines Ultraschallempfängers, der Schalldurchlässigkeitsänderungen der den Bereich der sich ausbildenden Schweissverbindung durchdringenden Ultraschallwellen zur Beurteilung der Schweissverbindung registriert, wobei
der Bereich der Schweissverbindung mit longitudinalen (l) und transversalen (t) Ultraschallwellen durchschallt wird,

**dadurch gekennzeichnet, dass** die zeitabhängigen Schalldurchlässigkeitsssänderungen $D_l(t)$, $D_t(t)$ für die longitudinalen (l) und transversalen (t) Ultraschallwellen jeweils getrennt voneinander registriert werden, und
dass anhand einer Verhältnisbildung aus $D_l(t)$ und $D_t(t)$ der Zeitpunkt $t_s$ ermittelt wird, an dem sich im Bereich der Schweissverbindüng eine Schmelze ausbildet und der als Grundlage für die Bewertung der Schweissverbindung dient.

2. Verfahren nach Anspruch 1,
   **dadurch gekennzeichnet, dass** der Zeitpunkt $t_s$, an dem sich im Bereich der Schweissverbindung zwischen den Fügepartnern eine Schmelze ausbildet, **dadurch** ermittelt wird, dass jener Zeitpunkt der zeitabhängigen Verhältnisfunktion aus $D_i(t)$ und $D_t(t)$ bestimmt wird, an dem die Verhältnisfunktion einen größten Sprung in der Steigung aufweist.

3. Verfahren nach Anspruch 1 oder 2,
   **dadurch gekennzeichnet, dass** der wenigstens eine Ultraschallsender über eine Kontaktfläche Ultraschallwellen in einen ersten Fügepartner einschallt, und dass der wenigstens eine Ultraschallempfänger die den Bereich der Schweissverbindung durchschallten Ultraschallwellen über eine Kontaktfläche aus einem zweiten Fügepartner registriert,
   dass zur Bewertung der Schweissverbindung die folgende zeitabhängige Verhältnisfunktion dient:

$$\frac{D_l(t)}{D_t(t)} = \frac{(EB)_l(t)\cdot(BB)_l(t)\cdot(BI)_l(t)\cdot(BE)_l(t)}{(EB)_t(t)\cdot(BB)_t(t)\cdot(BI)_t(t)\cdot(BE)_t(t)} \approx \frac{(EB)_l^2(t)\cdot(BB)_l(t)}{(EB)_t^2(t)\cdot(BB)_t(t)} \approx \frac{(BB)_l(t)}{(BB)_t(t)}$$

mit

$(EB)_{l\,odert}(t) \equiv$ Schalldurchlässigkeit an Schalleinkoppelfläche am ersten Fügepartner für Longitudinal- oder Transversalwellen
$(BB)_{l\,oder\,t}(t) \equiv$ Schalldurchlässigkeit am Kontakt zwischen den Fügepartnern für Longitudinal - oder Transversalwellen
$(B1)_{l\,oder\,t}(t) \equiv$ Schalldurchlässigkeit innerhalb der Fügepartner für Longitudinal - oder Transversalwellen
$(BE)_{l\,oder\,t}(t) \equiv$ Schalldurchlässigkeit an Schallauskoppelfläche am zweiten Fügepartner für Longitudinal - oder Transversalwellen

wobei $(BI)^2_{loder\,t}(t)$ sowie $(EB)^2_{l\,oder\,t}(t)$ für Longitudinal- und Transversalwellen unter Voraussetzung niedriger Frequenzen und kurzen Durchschallungswegen weitgehend gleich sind.

4. Verfahren nach Anspruch 3,
   **dadurch gekennzeichnet, dass** der Bewertung der Schweissverbindung die Größe der sich ausbildenden Schmelze zugrundegelegt wird, die aus der Größe des Steigungsunterschiedes der Verhältnisfunktion zum Zeitpunkt $t_s$ ermittelt wird.

5. Verfahren nach einem der Ansprüche 1 bis 4,
   **dadurch gekennzeichnet, dass** der Schweissvorgang im Rahmen eines Widerstandsschweissens durchgeführt wird, bei dem Kontaktelektroden an die Fügepartner angesetzt werden, die zugleich mit den Fügepartner Kontaktflächen bilden, über die die Ultraschallwellen eingekoppelt bzw. ausgekoppelt werden.

6. Verfahren nach einem der Ansprüche 1 bis 4,
   **dadurch gekennzeichnet, dass** der Schweissvorgang im Rahmen eines kontaktfreien Schweissprozesses durchgeführt wird, bei dem der Ultraschallsender und Ultraschallempfänger direkt mit den jeweiligen Fügepartnern in Kontakt gebracht wird.

7. Verfahren nach Anspruch 6,
   **dadurch gekennzeichnet, dass** als kontaktfreier Schweissprozess Laser-, Elektronen- oder lonenstrahlschweissen eingesetzt wird.

8. Verfahren nach einem der Ansprüche 1 bis 7,

**dadurch gekennzeichnet, dass** als Ultraschallsender und -empfänger Piezoelementprüfköpfe oder EMUS-Prüfköpfe verwendet werden.

9.  Verfahren nach einem der Ansprüche 1 bis 8,
    **dadurch gekennzeichnet, dass** durch eine On-Line Bewertung der sich ausbildenden Schweissverbindung Regelgrößen generiert werden, durch die der Schweissvorgang beeinflusst wird.

**Claims**

1.  Method of evaluating a weld joint between at least two parts being joined which is formed during a welding operation using at least one ultrasonic transmitter transmitting ultrasonic waves through the region of the weld joint being formed and also at least one ultrasonic receiver which registers acoustic transmissivity changes of the ultrasonic waves penetrating the region of the weld joint being formed for evaluating the weld joint, the region of the weld joint having longitudinal (1) and transverse (t) ultrasonic waves transmitted through it, **characterized in that** the time-dependent acoustic transmissivity changes $D_l(t)$, $D_t(t)$ for the longitudinal (1) and transverse (t) ultrasonic waves are in each case registered separately from one another, and **in that**, by means of forming a relation from $D_l(t)$ and $D_t(t)$, the time $t_s$ at which a melt is formed in the region of the weld joint and which serves as a basis for evaluating the weld joint is ascertained.

2.  Method according to Claim 1, **characterized in that** the time $t_s$ at which a melt is formed in the region of the weld joint between the parts being joined is ascertained by determining that time of the time-dependent relation function obtained from $D_l(t)$ and $D_t(t)$ at which the relation function has a maximum jump in the slope.

3.  Method according to Claim 1 or 2, **characterized in that** the at least one ultrasonic transmitter transmits ultrasonic waves into a first part being joined via a contact surface, and **in that** the at least one ultrasonic receiver registers via a contact surface from a second part being joined the ultrasonic waves transmitted through the region of the weld joint, and **in that** the following time-dependent relation function serves for evaluating the weld joint:

$$\frac{D_l(t)}{D_t(t)} = \frac{(EB)_l(t) \cdot (BB)_l(t) \cdot (BI)_l(t) \cdot (BE)_l(t)}{(EB)_t(t) \cdot (BB)_t(t) \cdot (BI)_t(t) \cdot (BE)_t(t)} \approx \frac{(EB)_l^2(t) \cdot (BB)_l(t)}{(EB)_t^2(t) \cdot (BB)_t(t)} \approx \frac{(BB)_l(t)}{(BB)_t(t)}$$

where

(EB)$_{1 \text{ or } t}$(t) $\equiv$ acoustic transmissivity at sound input surface on the first part being joined for longitudinal or transverse waves

(BB)$_{1 \text{ or } t}$ (t) $\equiv$ acoustic transmissivity at the contact between the parts being joined for longitudinal or transverse waves

(BI)$_{1 \text{ or } t}$ (t) $\equiv$ acoustic transmissivity within the parts being joined for longitudinal or transverse waves

(BE)$_{1 \text{ or } t}$ (t) $\equiv$ acoustic transmissivity at sound output surface on the second part being joined for longitudinal or transverse waves

(BI)$^2_{1 \text{ or } t}$(t) and (EB)$^2_{1 \text{ or } t}$(t) for longitudinal and transverse waves being largely the same assuming low frequencies and short through-transmission paths.

4.  Method according to Claim 3, **characterized in that** the size of the melt being formed, which is ascertained from the size of the slope difference of the relation function at the time $t_s$, is used as a basis for evaluating the weld joint.

5.  Method according to one of Claims 1 to 4, **characterized in that** the welding operation is performed in resistance welding in which contact electrodes are applied to the parts being joined and at the same time form contact surfaces with the parts being joined via which the ultrasonic waves are input or output.

6.  Method according to one of Claims 1 to 4, **characterized in that** the welding operation is performed in a contactless welding process in which the ultrasonic transmitter and ultrasonic receiver are brought directly into contact with the respective parts being joined.

7. Method according to Claim 6, **characterized in that** laser-beam, electron-beam or ion-beam welding is used as the contactless welding process.

8. Method according to one of Claims 1 to 7, **characterized in that** piezoelement probes or EMUS probes are used as ultrasonic transmitter and receiver.

9. Method according to one of Claims 1 to 8, **characterized in that** controlled variables by which the welding operation is influenced are generated by an on-line evaluation of the weld joint being formed.

**Revendications**

1. Procédé d'évaluation d'un assemblage soudé au cours d'un processus de soudage entre au moins deux partenaires jointifs, en utilisant au moins un émetteur ultrasonique faisant rayonner des ondes ultrasonores à travers la zone de l'assemblage soudé au cours du soudage, ainsi qu'au moins un récepteur ultrasonique qui enregistre les modifications de perméabilité acoustique des ondes ultrasonores traversant la zone de l'assemblage à souder afin d'évaluer l'assemblage soudé,
la zone de l'assemblage soudé étant traversée par des ondes ultrasonores longitudinales (1) et transversales (t),
**caractérisé en ce que**
les modifications de perméabilité acoustique en fonctions du temps $D_1(t)$, $D_t(t)$ pour les ondes ultrasonores longitudinales (1) et transversales (t) sont enregistrées à chaque fois séparément les unes des autres, et
en formant une relation proportionnelle à partir de $D_l(t)$ et $Dt(t)$, on détermine le moment $t_s$ où une fusion se produit dans la zone de l'assemblage soudé, moment qui sert de base à l'évaluation de l'assemblage soudé.

2. Procédé selon la revendication 1,
**caractérisé en ce que**
le moment $t_s$ où une fusion se produit dans la zone de l'assemblage soudé entre les partenaires jointifs est déterminé de sorte que chaque moment de la fonction proportionnelle en fonction du temps est défini à partir de $D_1(t)$ et $D_t(t)$, où la fonction proportionnelle présente une discontinuité plus importante dans la pente.

3. Procédé selon la revendication 1 ou 2,
**caractérisé en ce qu'**
au moins un émetteur ultrasonore active des ondes ultrasonores dans un premier partenaire jointif sur une surface de contact et au moins un récepteur ultrasonore enregistre les ondes ultrasonores qui ont traversé la zone de l'assemblage soudé sur une surface de contact d'un deuxième partenaire jointif,
et pour évaluer l'assemblage soudé on utilise la fonction proportionnelle suivante en fonction du temps :

$$\frac{D_l(t)}{D_t(t)} = \frac{(EB)_l(t)\cdot(BB)_l(t)\cdot(BI)_l(t)\cdot(BE)_l(t)}{(EB)_t(t)\cdot(BB)_t(t)\cdot(BI)_t(t)\cdot(BE)_t(t)} \approx \frac{(EB)_l^2(t)\cdot(BB)_l(t)}{(EB)_t^2(t)\cdot(BB)_t(t)} \approx \frac{(BB)_l(t)}{(BB)_t(t)}$$

où :

$(EB)_{1\,ou\,t}(t)$ = la perméabilité acoustique au niveau de la surface d'activation acoustique sur le premier partenaire jointif pour les ondes longitudinales ou transversales
$(BB)_{1\,ou\,t}(t)$ = la perméabilité acoustique au niveau du contact entre les partenaires jointifs pour les ondes longitudinales ou transversales
$(B1)_{1\,ou\,t}(t)$ = la perméabilité acoustique à l'intérieur des partenaires jointifs pour les ondes longitudinales ou transversales,
$(BE)_{1\,ou\,t}(t)$ = la perméabilité acoustique sur la surface de désactivation acoustique sur le deuxième partenaire jointif assemblé pour les ondes longitudinales ou transversales
dans laquelle $(B1)^2_{1\,ou\,t}(t)$ et $(EB)^2_{1\,ou\,t}(t)$ pour les ondes longitudinales et transversales sont largement égales dans l'hypothèse de fréquences plus basses et de trajets de rayonnement courts.

4. Procédé selon la revendication 3,
**caractérisé en ce que**
pour l'évaluation de l'assemblage soudé, on part de la grandeur de la fusion obtenue qui a été déterminée à partir de la grandeur de la différence de pente de la fonction proportionnelle au moment $t_s$.

5.  Procédé selon l'une des revendications 1 à 4,
    **caractérisé en ce que**
    le processus de soudage est réalisé dans le cadre d'un soudage de résistance dans lequel des électrodes de contact sont appliquées sur les partenaires jointifs et forment des surfaces de contact en même temps que les partenaires jointifs pour permettre l'activation ou la désactivation des ondes ultrasonores.

6.  Procédé selon l'une des revendications 1 à 4,
    **caractérisé en ce que**
    le processus de soudage est réalisé dans le cadre d'un processus de soudage sans contact, dans lequel l'émetteur ultrasonore et le récepteur ultrasonore sont directement amenés au contact des partenaires jointifs respectifs.

7.  Procédé selon la revendication 6,
    **caractérisé en ce qu'**
    on utilise des soudages au laser, par électrodes ou par rayon ionique pour le processus de soudage sans contact.

8.  Procédé selon l'une des revendications 1 à 7,
    **caractérisé en ce qu'**
    on utilise des têtes de contrôle d'éléments piézo-électriques ou des têtes de contrôle EMUS pour l'émetteur ou le récepteur ultrasonore.

9.  Procédé selon l'une des revendications 1 à 8,
    **caractérisé en ce que**
    des grandeurs de réglage sont générées par une évaluation en ligne de l'assemblage soudé au cours du soudage et permettent d'influencer le processus de soudage.

## Fig. 1a

## Fig. 1b

## Fig. 1c

## Fig. 2

## Fig. 3

**Fig. 4**